# EUROPÄISCHE PATENTSCHRIFT

(11) **EP 3 426 425 B1**
(45) Veröffentlichungstag und Bekanntmachung des Hinweises auf die Patenterteilung: **15.06.2022**
(21) Anmeldenummer: 17707328.5
(22) Anmeldetag: 27.02.2017
(51) Int. Cl.: B22F 3/105, B29C 67/00, B33Y 10/00, B33Y 30/00

(54) **VORRICHTUNG ZUR ADDITIVEN HERSTELLUNG EINES DREIDIMENSIONALEN OBJEKTS**
DEVICE FOR THE ADDITIVE MANUFACTURING OF A THREE-DIMENSIONAL OBJECT
DISPOSITIF POUR LA FABRICATION ADDITIVE D'UN OBJET TRIDIMENSIONNEL

(30) Priorität: 08.03.2016 DE 102016104180
(43) Veröffentlichungstag der Anmeldung: 16.01.2019
(73) Patentinhaber: CL Schutzrechtsverwaltungs GmbH, 96215 Lichtenfels (DE)
(72) Erfinder: HERZOG, Frank, 96215 Lichtenfels (DE); BECHMANN, Florian, 96215 Lichtenfels (DE); ZEULNER, Fabian, 96215 Lichtenfels (DE)
(74) Vertreter: Hafner & Kohl PartmbB
(86) Internationale Anmeldenummer: PCT/EP2017/054496
(87) Internationale Veröffentlichungsnummer: WO 2017/153195

(56) Entgegenhaltungen:
- EP-A1- 2 942 130
- US-A- 6 054 077
- US-A1- 2014 052 288
- US-A1- 2015 183 168

## Beschreibung

Die Erfindung betrifft eine Vorrichtung zur additiven Herstellung eines dreidimensionalen Objekts durch sukzessive schichtweise selektive Belichtung und damit einhergehende Verfestigung von in einer Bauebene ausgebildeten Baumaterialschichten aus verfestigbarem Baumaterial vermittels wenigstens eines Energiestrahls, umfassend eine Belichtungseinrichtung, welche wenigstens ein Belichtungselement zur Erzeugung eines auf die Bauebene gerichteten Energiestrahls zur selektiven Belichtung einer selektiv zu verfestigenden Baumaterialschicht, umfasst.

Derartige Vorrichtungen zur additiven bzw. generativen Herstellung dreidimensionaler Objekte sind an und für sich bekannt. Vermittels entsprechenden Vorrichtungen werden herzustellende dreidimensionale Objekte durch sukzessive schichtweise selektive Belichtung und damit einhergehende Verfestigung von in einer Bauebene sukzessive aufgebrachten Baumaterialschichten aus verfestigbarem Baumaterial in jeweiligen Querschnittsbereichen der jeweils herzustellenden Objekte entsprechenden Bereichen vermittels eines Energiestrahls additiv bzw. generativ aufgebaut. Die sukzessive selektive schichtweise Belichtung und damit Verfestigung der zu verfestigenden Baumaterialschichten erfolgt auf Grundlage von die geometrische Gestalt, d. h. insbesondere die schichtbezogenen Querschnittsgeometrien, des jeweils herzustellenden dreidimensionalen Objekts beschreibenden Baudaten.

Zur selektiven Belichtung selektiv zu verfestigender Baumaterialschichten ist vorrichtungsseitig eine Belichtungseinrichtung vorhanden. Die Belichtungseinrichtung umfasst ein oder mehrere Belichtungselemente, welche zur Erzeugung eines auf die Bauebene gerichteten Energiestrahls eingerichtet sind.

Insbesondere bei vergleichsweise großen Bauebenen bzw. Bauvolumina ist eine bewegbare Lagerung entsprechender Belichtungselemente zweckmäßig. Die hierzu üblichen technischen Lösungen sind jedoch z. B. im Hinblick auf Flexibilität, Präzision und Leichtgängigkeit der Bewegung der Belichtungselemente weiterentwicklungsbedürftig.

US2015/183168 A1 offenbart eine Vorrichtung zur additiven Herstellung dreidimensionaler Objekte mit einer Gantry-Konstruktion zur Lagerung einer Lasereinheit.

US 2014/052288 A1 offenbart eine Scannereinrichtung mit magnetisch aktivierbaren optischen Elementen. Der Erfindung liegt die Aufgabe zugrunde, eine demgegenüber, insbesondere im Hinblick auf Flexibilität, Präzision und Leichtgängigkeit der Bewegung der Belichtungselemente, verbesserte Vorrichtung zur additiven Herstellung dreidimensionaler Objekte anzugeben. Die Aufgabe wird durch eine Vorrichtung gemäß Anspruch 1 gelöst. Die abhängigen Ansprüche betreffen besondere Ausführungsformen der Vorrichtung. Die Aufgabe wird ferner durch ein Verfahren gemäß Anspruch 11 gelöst. Die hierin beschriebene Vorrichtung dient im Allgemeinen der additiven beziehungsweise generativen Herstellung wenigstens eines dreidimensionalen Objekts, d. h. beispielsweise eines technischen Bauteils, beziehungsweise einer technischen Bauteilgruppe, durch sukzessives schichtweises selektives Belichtung und damit einhergehendes Verfestigen einzelner Baumaterialschichten aus einem verfestigbaren Baumaterial vermittels wenigstens eines von wenigstens einem einer Belichtungseinrichtung zugehörigen Belichtungselement erzeugten Laserstrahls. Bei dem Energiestrahl kann es sich um einen Laserstrahl, bei der Vorrichtung kann es sich entsprechend um eine Vorrichtung zur Durchführung selektiver Laserschmelzverfahren (SLM-Verfahren) oder selektiver Lasersinterverfahren (SLS Verfahren) handeln. Bei einem vermittels entsprechender Energiestrahlung verfestigbaren Baumaterial kann es sich um ein Metall-Kunststoff- und/oder Keramikpulver handeln. Unter einem Metall-Kunststoff- oder Keramikpulver kann auch ein Pulvergemisch unterschiedlicher Metalle, Kunststoffe oder Keramiken verstanden werden. Für ein Metallpulver gilt insofern dass es sich hierbei auch um ein Pulver aus wenigstens einer Metalllegierung handeln kann. Die sukzessive schichtweise selektive Belichtung und die damit einhergehende sukzessive schichtweise selektive Verfestigung der zur Herstellung eines dreidimensionalen Objekts (im Weiteren abgekürzt als "Objekt" bezeichnet) jeweils zu verfestigenden Baumaterialschichten erfolgt auf Grundlage von objektbezogenen Baudaten. Entsprechende Baudaten beschreiben im Allgemeinen die geometrische beziehungsweise geometrischkonstruktive Gestalt des Objekts. Entsprechende Baudaten können beispielsweise CAD-Daten des herzustellenden Objekts sein beziehungsweise solche beinhalten. Die Vorrichtung umfasst sämtliche zur Durchführung additiver Bauprozesse typischerweise erforderlichen Funktionskomponenten. Da der funktionelle beziehungsweise konstruktive Aufbau entsprechender Vorrichtungen an und für sich bekannt ist, werden im Weiteren nur die zur Erläuterung des hierin beschriebenen Prinzips wesentlichen Funktionskomponenten der Vorrichtung naher erläutert.

Die erste zur Erläuterung des hierin beschriebenen Prinzips wesentliche Funktionskomponente der Vorrichtung ist eine Belichtungseinrichtung. Die Belichtungseinrichtung umfasst wenigstens ein Belichtungselement, welches zur Erzeugung eines auf die Bauebene gerichteten Energiestrahls zur selektiven Belichtung einer selektiv zu verfestigenden Baumaterialschicht eingerichtet ist. Weiter unten ist erläutert, dass es sich bei einem Belichtungselement u.a. z. B. um ein Laserdiodenelement handeln bzw. ein Belichtungselement wenigstens ein Laserdiodenelement umfassen kann.

Eine weitere zur Erläuterung des hierin beschriebenen Prinzips wesentliche Funktionskomponente der Vorrichtung ist eine magnetische Bewegungs- und Lagerungseinrichtung (im Weiteren abgekürzt als "magnetische Lagerungseinrichtung" bezeichnet), welche zur bewegbaren Lagerung wenigstens eines (innerhalb einer vorrichtungsseitigen Bau- oder Prozesskammer angeordneten) Belichtungselements in wenigstens einem Bewegungsfreiheitsgrad relativ zu der Bauebene eingerichtet ist. Die vermittels der magnetischen Lagerungseinrichtung realisierte bewegbare Lagerung basiert - wie sich im Weiteren näher ergibt - auf einer magnetischen Wechselwirkung zwischen verschiedenen, verschiedenen Funktionskomponenten der Vorrichtung zugeordneten magnetischen Bestandteilen der Lagerungseinrichtung und erlaubt eine besonders präzise, schnelle und leichtgängige, d. h. verschleißarme, Bewegung einzelner, mehrerer oder sämtlicher Belichtungselemente in wenigstens einem Bewegungsfreiheitsgrad relativ zu der Bauebene. Bewegungen eines Belichtungselements können translatorische Bewegungsfreiheitsgrade entlang wenigstens einer Translationsachse und/oder rotatorische Bewegungsfreiheitsgrade um wenigstens eine Rotationsachse beinhalten. Bei einer Bewegung eines Belichtungselements relativ zu der Bauebene und/oder relativ zu wenigstens einem weiteren Belichtungselement kann es sich sonach z. B. um eine Linearbewegung entlang einer linearen Bewegungsachse (Translationsachse) und/oder um eine Drehbewegung um eine Drehachse (Rotationsachse) handeln. Selbstverständlich können einzelne, mehrere oder sämtliche Belichtungselemente in unterschiedlichen Bewegungsfreiheitsgraden kombiniert bewegbar sein.

Die magnetische Lagerungseinrichtung erlaubt eine präzise, schnelle und flexible Anordnung und Ausrichtung jeweiliger Belichtungselemente relativ zu der Bauebene, was insbesondere bei vergleichsweise komplexen Geometrien der herzustellenden Objekte als auch bei vergleichsweise großen Bauebenen bzw. Bauvolumina zweckmäßig sein kann, um eine möglichst hohe Bauteilqualität, eine möglichst hohe Baurate sowie eine möglichst gleichmäßige Auslastung jeweiliger Belichtungselemente zu erhalten.

Für den Fall, in dem die Belichtungseinrichtung eine Vielzahl an Belichtungselementen umfasst, wobei eine bestimmte Anzahl an Belichtungselementen baulich zu wenigstens einer Belichtungselementgruppe zusammengefasst sind, können unterschiedliche Belichtungselementgruppen abhängig oder unabhängig voneinander, insbesondere bezogen auf ein herzustellendes Objekt, bewegbar sein. Eine jeweilige Belichtungselementgruppe kann eine bestimmte Anzahl an in einer bestimmten Ausrichtung relativ zueinander, z. B. reihen- und/oder spaltenartig, angeordneten Belichtungselementen umfassen.

Insgesamt bietet die hierin beschriebene Vorrichtung eine verbesserte, weil besonders flexible, präzise, schnelle und leichtgängige, d. h. verschleißarme, Bewegung jeweiliger Belichtungselemente; somit liegt eine verbesserte Vorrichtung vor.

Die magnetische Lagerungseinrichtung umfasst wenigstens ein an der vorrichtungsseitigen Gehäusestruktur, d. h. insbesondere zumindest abschnittsweise oberhalb der Bauebene, angeordnetes oder ausgebildetes und dieser somit zugeordnetes magnetisches Statorelement und wenigstens ein an wenigstens einem Belichtungselement angeordnetes oder ausgebildetes, d. h. insbesondere mit wenigstens einem Belichtungselement bewegungsgekoppeltes, und diesem somit zugeordnetes magnetisches Läuferelement. Das magnetische Läuferelement ist durch magnetische Wechselwirkung mit dem magnetischen Statorelement relativ zu diesem bewegbar gelagert. Die bewegbare Lagerung eines jeweiligen Belichtungselements ist sonach durch eine magnetische Wechselwirkung zwischen dem magnetischen Statorelement und einem mit dem Belichtungselement bewegungsgekoppelten Läuferelement realisiert. Sowohl das magnetische Statorelement als auch das magnetische Läuferelement umfasst als aktiven magnetischen Bestandteil typischerweise wenigstens ein elektromagnetisches Bauelement, zu dessen elektrischer Versorgung das magnetische Statorelement und/oder das magnetische Läuferelement mit einer elektrischen Energieversorgung verbunden ist. In diesem Zusammenhang ist auch eine elektrische Verbindung zwischen dem magnetischen Statorelement und dem magnetischen Läuferelement möglich. Die elektrische Verbindung zwischen einem magnetischen Statorelement und einem magnetischen Läuferelement kann z. B. vermittels eines elektrischen Verbindungselements, insbesondere eines elektrischen Verbindungskabels, zwischen einem magnetischen Statorelement und einem magnetischen Läuferelement realisiert werden.

Jeweilige magnetische Stator- bzw. Läuferelemente sind typische Bestandteile von Planarantrieben; die magnetische Lagerungseinrichtung ist sonach als Planarantrieb ausgebildet oder umfasst wenigstens einen solchen.

Im Hinblick auf die Ausbildung der magnetischen Lagerungseinrichtung als Planarantrieb kann die magnetische Lagerungseinrichtung die zur Realisierung eines entsprechenden Planarantriebs erforderlichen bzw. zweckmäßigen Funktionskomponenten, d. h. z. B. eine eine Gleitlagerung eines magnetischen Läuferelements entlang des magnetischen Statorelements ermöglichende Gleitlagereinrichtung und/oder eine eine (pneumatisch) schwebende Lagerung eines magnetischen Läuferelements entlang des magnetischen Statorelements ermöglichende (pneumatische) Lagerungseinrichtung, umfassen.

Das wenigstens eine magnetische Statorelement umfasst typischerweise wenigstens einen eine Bewegungsbahn oder -ebene für ein magnetisches Läuferelement definierenden flächigen Statorelementabschnitt. Der Begriff "flächig" beinhaltet sowohl planebene als auch nicht planebene, d. h. z. B. gebogene bzw. gewölbte, Flächen. Ein flächiger Statorelementabschnitt kann demnach zumindest abschnittsweise, insbesondere vollständig, planeben oder zumindest abschnittsweise, insbesondere vollständig, gebogen oder gewölbt, d. h. insbesondere auch kuppelartig, ausgebildet sein.

Ein flächiger Statorelementabschnitt kann parallel und/oder winklig relativ zu der Bauebene ausgerichtet sein. Eine parallele Anordnung eines flächigen Statorelementabschnitts relativ zu der Bauebene ermöglicht eine Bewegung jeweiliger magnetischer Läuferelemente bzw. damit bewegungsgekoppelter Belichtungselemente parallel zu der Bauebene und somit eine rechtwinklige, d. h. unter einem Belichtungswinkel von ca. 90° relativ zu der Bauebene erfolgende, Belichtung der Bauebene. Eine winklige, d. h. z. B. geneigte, Anordnung eines flächigen Statorelementabschnitts relativ zu der Bauebene ermöglicht eine Bewegung jeweiliger magnetischer Läuferelemente bzw. damit bewegungsgekoppelter Belichtungselemente in einem Winkel (deutlich) unterhalb 90° relativ zu der Bauebene und somit eine winklige, d. h. unter einem Belichtungswinkel < 90°, insbesondere zwischen 1 und 89°, bevorzugt zwischen 10 und 80°, relativ zu der Bauebene erfolgende, Belichtung der Bauebene.

Allgemein gilt, dass sich durch die geometrische Ausgestaltung, d. h. insbesondere Form und Abmessungen, jeweiliger flächiger Statorelementabschnitte und/oder die Ausrichtung jeweiliger flächiger Statorelementabschnitte relativ zu der Bauebene unterschiedliche Bewegungsbahnen bzw. -ebenen jeweiliger magnetischer Läuferelemente und somit ein Höchstmaß an Flexibilität im Hinblick auf mögliche Bewegungen jeweiliger Belichtungselemente sowie daraus resultierender Belichtungssituationen realisieren lässt.

Typischerweise ist wenigstens ein flächiger Statorelementabschnitt parallel zu der Bauebene ausgerichtet und oberhalb der Bauebene angeordnet. Die flächenmäßige Erstreckung eines parallel zu der Bauebene ausgerichteten, oberhalb der Bauebene angeordneten flächigen Statorelementabschnitts ist derart gewählt, dass der flächige Statorelementabschnitt die Bauebene zumindest abschnittsweise, gegebenenfalls vollständig, abdeckt. Selbstverständlich ist zwischen dem Statorelementabschnitt und der Bauebene ein hinreichend großer Abstand vorhanden, sodass die magnetische Wechselwirkung zwischen dem magnetischen Statorelement und dem magnetischen Läuferelemente keinen (magnetischen) Einfluss auf die Güte einer in der Bauebene ausgebildeten (magnetischen bzw. magnetisierbaren) Baumaterialschicht hat. Gegebenenfalls können hierfür gesonderte magnetische Abschirmungselemente, z. B. aus einer geeigneten Abschirmungsstruktur bzw. einem geeigneten Abschirmungsmaterial, z. B. einem Abschirmungsblech, vorgesehen sein. Der Vorrichtung kann sonach wenigstens ein zwischen der Bauebene und der magnetischen Lagerungseinrichtung anordenbares oder angeordnetes Abschirmungselement zur magnetischen Abschirmung der Bauebene von der magnetischen Lagerungseinrichtung zugehörig sein.

Winklig relativ zu der Bauebene ausgerichtete flächige Statorelementabschnitte können sich zumindest abschnittsweise, gegebenenfalls vollständig, entlang der Außenabmessungen der Bauebene erstrecken und die Außenabmessungen der Bauebene sonach zumindest abschnittsweise, gegebenenfalls vollständig, umgeben. Selbstverständlich können mehrere winklig relativ zu der Bauebene ausgerichtete flächige Statorelementabschnitte vorhanden sein, welche die Außenabmessungen der Bauebene gemeinsam zumindest abschnittsweise, gegebenenfalls vollständig, umgeben. Durch eine winklige Anordnung jeweiliger flächiger Statorelementabschnitte relativ zu der Bauebene kann eine zumindest abschnittsweise "Einrahmung" der Bauebene mit entsprechenden flächigen Statorelementabschnitten gegeben sein. Durch jeweilige an jeweiligen flächigen Statorelementabschnitten bewegbar gelagerte magnetische Läuferelemente bzw. jeweilige mit diesen bewegungsgekoppelte Belichtungselemente ist eine (simultane) Belichtung der Bauebene aus unterschiedlichen Richtungen und/oder mit unterschiedlichen Belichtungswinkeln möglich.

Um die Flexibilität möglicher Bewegungen jeweiliger Belichtungselemente und daraus resultierender Belichtungssituationen weiter zu erhöhen, können - unabhängig von der Anordnung und Ausrichtung jeweiliger flächiger Statorelementabschnitte relativ zu der Bauebene - auch flächige Statorelementabschnitte in wenigstens einem Bewegungsfreiheitsgrad relativ zu der Bauebene bewegbar gelagert sein. Hierfür sind die flächigen Statorelementabschnitte an einer in wenigstens einem Bewegungsfreiheitsgrad relativ zu der Bauebene bewegbar gelagerten Halteeinrichtung gehaltert. Bewegungen einer entsprechenden Halteeinrichtung können translatorische Bewegungsfreiheitsgrade entlang wenigstens einer Translationsachse und/oder rotatorische Bewegungsfreiheitsgrade um wenigstens eine Rotationsachse beinhalten. Bei einer Bewegung einer entsprechenden Halteeinrichtung relativ zu der Bauebene kann es sich sonach z. B. um eine Linearbewegung entlang einer linearen Bewegungsachse (Translationsachse) und/oder um eine Drehbewegung um eine Drehachse (Rotationsachse) handeln. Selbstverständlich kann die Halteinrichtung in unterschiedlichen Bewegungsfreiheitsgraden kombiniert bewegbar sein

Einzelne, mehrere oder sämtliche flächigen Statorelementabschnitte können modulartig ausgebildet sein, wobei die modulartig ausgebildeten flächigen Statorelementabschnitte in wenigstens einer vorbestimmten Anordnungsposition relativ zu der Bauebene lösbar an einer vorrichtungsseitigen Gehäusestruktur befestigbar oder befestigt sind. Die Gehäusestruktur kann beispielsweise mit unterschiedlich ausgerichteten, z. B. im Hinblick auf die geometrische Gestaltung, d. h. insbesondere Abmessungen und Form, der einschubartig ausgestalteten, Aufnahmeeinrichtungen zur jeweiligen Aufnahme wenigstens eines flächigen Statorelementabschnitts ausgestattet sein. Derart ist es möglich, die Vorrichtung im Hinblick auf bestimmte "Baujobs", d. h. die additive Herstellung bestimmter Objekte, individuell zu konfigurieren, um eine möglichst hohe Bauteilqualität und/oder Baurate zu erhalten.

Bei einem Belichtungselement kann es sich um ein Laserdiodenelement oder um ein mit einem Laserdiodenelement koppelbares oder gekoppeltes, insbesondere linsenförmiges, optisches Element oder um ein Scannerelement als Teil einer auch als Strahlablenkeinrichtung zu bezeichnenden bzw. zu erachtenden optischen Scannereinrichtung handeln bzw. kann ein Belichtungselement wenigstens eines der genannten Elemente umfassen. Eine Zweckmäßigkeit von Laserdiodenelementen ist deren geringes Gewicht, sodass zur Bewegung der Belichtungselemente vergleichsweise kleine Massen zu bewegen sind.

Jeweilige Laserdioden- und Scannerelemente können innerhalb einer durch eine vorrichtungsseitige Gehäusestruktur begrenzten Bau- oder Prozesskammer, in welcher additive Bauvorgänge durchgeführt werden, angeordnet sein. Ein oder mehrere Laserdiodenelemente können jedoch auch außerhalb einer entsprechenden Bau- oder Prozesskammer angeordnet sein. In diesem Fall sind jeweils mit wenigstens einem Laserdiodenelement optisch koppelbare oder gekoppelte optische Elemente, z. B. in Form von optischen Linsenelemente zur Fokussierung eines Energiestrahls auf die Bauebene, innerhalb der Bau- oder Prozesskammer angeordnet.

Die Erfindung betrifft ferner ein Verfahren zur additiven Herstellung wenigstens eines dreidimensionalen Objekts durch sukzessive schichtweise selektive Verfestigung einzelner Baumaterialschichten aus verfestigbarem Baumaterial vermittels wenigstens eines Laserstrahls. Bei dem Verfahren kann es sich um ein selektives Laserschmelzverfahren (SLM-Verfahren) oder um ein selektives Lasersinterverfahren (SLS-Verfahren) handeln. Das Verfahren zeichnet sich dadurch aus, dass eine wie beschriebene Vorrichtung zur additiven Herstellung wenigstens eines dreidimensionalen Objekts verwendet wird. Mithin gelten sämtliche vorstehenden Ausführungen im Zusammenhang der Vorrichtung analog für das Verfahren.

Die Erfindung ist anhand von Ausführungsbeispielen in den Zeichnungsfiguren näher erläutert. Dabei zeigen:

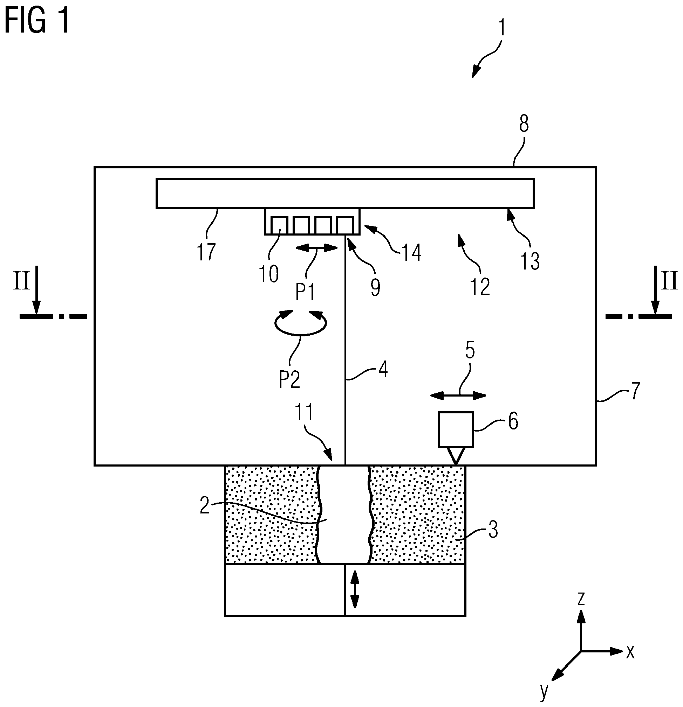

- Fig. 1-6: je eine Prinzipdarstellung einer Vorrichtung zur additiven Herstellung eines dreidimensionalen Objekts gemäß einem Ausführungsbeispiel.

Fig. 1 zeigt eine Prinzipdarstellung einer Vorrichtung 1 gemäß einem Ausführungsbeispiel. Die Vorrichtung 1 dient zur additiven Herstellung eines dreidimensionalen Objekts 2, d. h. beispielsweise eines technischen Bauteils bzw. einer technischen Bauteilgruppe, durch sukzessives schichtweises selektives Belichten und damit einhergehendes Verfestigen von Baumaterialschichten aus einem verfestigbaren Baumaterial 3 vermittels wenigstens eines Energie- bzw. Laserstrahls 4.

Bei dem verfestigbaren Baumaterial 3 kann es sich um ein Metallpulver(gemisch), d. h. z. B. um ein Aluminiumpulver(gemisch) oder Stahlpulver(gemisch), und/oder um ein Kunststoffpulver(gemisch), d. h. z. B. um ein Polyetheretherketonpulver(gemisch), und/oder um Keramikpulver(gemisch), d. h. z. B. um ein Aluminiumoxidpulver(gemisch), handeln.

Jeweilige zu verfestigende Baumaterialschichten werden vermittels einer, wie durch den horizontal ausgerichteten Doppelpfeil 5 angedeutet, bewegbar gelagerten Beschichtereinrichtung 6 in einer durch eine Gehäusestruktur 7 der Vorrichtung 1 angeordneten Prozesskammer 8 der Vorrichtung 1 gebildet. In der Prozesskammer 8 herrscht typischerweise eine Schutzgasatmosphäre, d. h. z. B. eine Argon- oder Stickstoffatmosphäre. Die sukzessive schichtweise selektive Verfestigung jeweiliger zu verfestigender Baumaterialschichten erfolgt derart, dass ein oder mehrere Energiestrahlen 4 selektiv auf bestimmte zu verfestigende, jeweiligen schichtbezogenen Querschnittsgeometrien des herzustellenden Objekts 2 entsprechende Bereiche jeweiliger Baumaterialschichten gerichtet werden ("selektive Belichtung").

Jeweilige Energiestrahlen 4 werden von einer Belichtungseinrichtung 9 zugehörigen Belichtungselementen 10 erzeugt. Ein jeweiliges Belichtungselement 10 ist entsprechend zur Erzeugung eines auf die Bauebene 11 gerichteten Energiestrahls 4 zur selektiven Belichtung einer selektiv zu verfestigenden Baumaterialschicht eingerichtet. Die Belichtungselemente 10 können in einer reihen- und/oder spaltenartigen Anordnung ("matrixartig") angeordnet sein.

Bei einem Belichtungselement 10 kann es sich um ein, gegebenenfalls in wenigstens einem die Strahleigenschaften betreffenden Parameter, d. h. z. B. ihrer Eingangs- bzw. Ausgangsleistung, variierbares ("dimmbares"), Laserdiodenelement handeln. Über entsprechend variierbare Laserdiodenelemente lassen sich, z. B. durch Variation der Eingangs- und/oder Ausgangsleistung, Laserstrahlen mit unterschiedlichen Strahleigenschaften, d. h. z. B. unterschiedlicher Energiedichte, Intensität, etc., erzeugen. Die über entsprechende Laserdiodenelemente emittierten Laserleistungen liegen typischerweise in einem Bereich zwischen 0,1 und 10 Watt.

Die Vorrichtung 1 umfasst eine magnetische Bewegungs- und Lagerungseinrichtung 12 (im Weiteren abgekürzt als "magnetische Lagerungseinrichtung" bezeichnet), welche zur bewegbaren Lagerung der Belichtungseinrichtung 9 bzw. der dieser zugehörigen Belichtungselemente 10 relativ zu der Bauebene 11 eingerichtet ist. Die vermittels der magnetischen Lagerungseinrichtung 12 realisierte bewegbare Lagerung basiert auf einer magnetischen Wechselwirkung zwischen verschiedenen, verschiedenen Funktionskomponenten der Vorrichtung 1 zugeordneten magnetischen Bestandteilen der magnetischen Lagerungseinrichtung 12 und erlaubt eine besonders präzise, schnelle und leichtgängige, d. h. verschleißarme, Bewegung der Belichtungselemente 10 in wenigstens einem Bewegungsfreiheitsgrad relativ zu der Bauebene 11. Bewegungen eines Belichtungselements 10 können - wie durch den Doppelpfeil P1 angedeutet - translatorische Bewegungsfreiheitsgrade entlang wenigstens einer Translationsachse und/oder - wie durch den Doppelpfeil P2 angedeutet - rotatorische Bewegungsfreiheitsgrade um wenigstens eine Rotationsachse beinhalten. Bei einer Bewegung eines Belichtungselements 10 kann es sich sonach z. B. um eine Linearbewegung entlang einer linearen Bewegungsachse (Translationsachse) und/oder um eine Drehbewegung um eine Drehachse (Rotationsachse) handeln. Beispielhafte Translations- bzw. Bewegungsachsen sind durch die Achsen des in Fig. 1 zur Veranschaulichung dargestellten Koordinatensystems gegeben. Selbstverständlich können die Belichtungselemente 10 in unterschiedlichen Bewegungsfreiheitsgraden kombiniert bewegbar sein.

Die magnetische Lagerungseinrichtung 12 umfasst ein an der vorrichtungsseitigen Gehäusestruktur 7 oberhalb der Bauebene 11 angeordnetes oder ausgebildetes magnetisches Statorelement 13 und ein an den Belichtungselementen 10 angeordnetes oder ausgebildetes, d. h. mit den Belichtungselementen 10 bewegungsgekoppeltes magnetisches Läuferelement 14. Das magnetische Statorelement 13 und das magnetische Läuferelemente 14 stellen magnetisch zusammenwirkende Bestandteile eines Planarantriebs dar; die magnetische Lagerungseinrichtung 12 ist sonach als Planarantrieb ausgebildet.

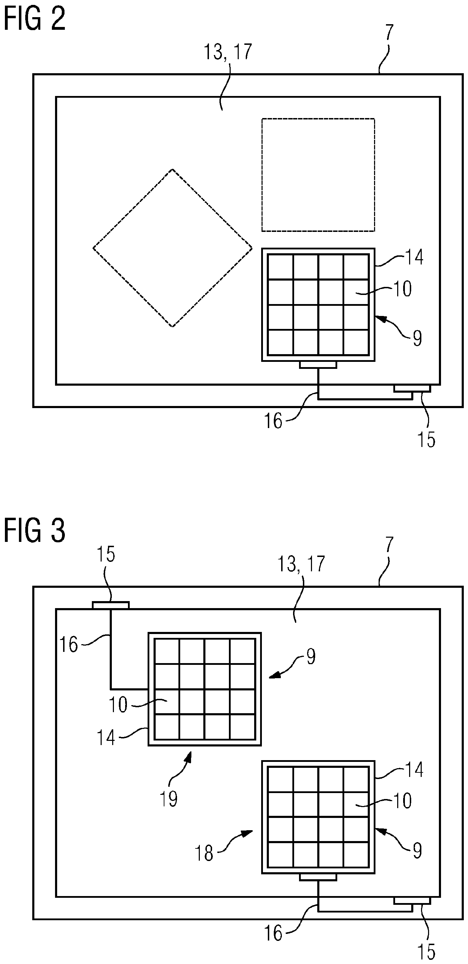

Das magnetische Statorelement 13 ist der Gehäusestruktur 7 zugeordnet, das magnetische Läuferelement 14 ist der Belichtungseinrichtung 9 bzw. den Belichtungselementen 10 zugeordnet. Das magnetische Läuferelement 14 ist durch magnetische Wechselwirkung mit dem magnetischen Statorelement 13 relativ zu diesem bewegbar gelagert. Die bewegbare Lagerung der Belichtungselemente 10 ist sonach durch magnetische Wechselwirkung zwischen dem magnetischen Statorelement 13 und dem mit den Belichtungselementen 10 bewegungsgekoppelten magnetischen Läuferelement 14 realisiert. Sowohl das magnetische Statorelement 13 als auch das magnetische Läuferelement 14 umfasst als aktiven magnetischen Bestandteil typischerweise wenigstens ein elektromagnetisches Bauelement (nicht näher gezeigt), zu dessen elektrischer Versorgung das magnetische Statorelement 13 bzw. das magnetische Läuferelement 14 mit einer elektrischen Energieversorgung 15 (vgl. Fig. 2) verbunden ist.

Wenngleich in den Fig. nicht explizit dargestellt, umfasst die magnetische Lagerungseinrichtung 12 die zur Realisierung eines Planarantriebs erforderlichen bzw. zweckmäßigen Funktionskomponenten, d. h. z. B. eine eine Gleitlagerung eines magnetischen Läuferelements 14 entlang des magnetischen Statorelements 13 ermöglichende Gleitlagereinrichtung und/oder eine eine (pneumatisch) schwebende Lagerung eines magnetischen Läuferelements 14 entlang des magnetischen Statorelements 13 ermöglichende (pneumatische) Lagerungseinrichtung.

Fig. 2 zeigt eine entlang den in Fig. 1 eingetragenen Schnittlinien II - II geschnittene Ansicht durch die Vorrichtung 1 mit Blickrichtung in Richtung der Decke der Gehäusestruktur 7.

Anhand der Fig. 1, Fig. 2 ist zunächst ersichtlich, dass das magnetische Statorelement 13 einen flächigen Statorelementabschnitt 17 aufweist. Der flächige Statorelementabschnitt 17 definiert die Bewegungsebene, innerhalb welcher das magnetische Läuferelement 14 bewegbar ist. Der flächige Statorelementabschnitt 17 ist planeben (flach) ausgebildet und parallel zu der Bauebene 11 ausgerichtet. Die flächenmäßige Erstreckung des flächigen Statorelementabschnitts 17 ist derart gewählt, dass der flächige Statorelementabschnitt 17 die Bauebene 11 zumindest abschnittsweise, gegebenenfalls vollständig, abdeckt. Die parallele Anordnung des flächigen Statorelementabschnitts 17 relativ zu der Bauebene 11 ermöglicht eine Bewegung des magnetischen Läuferelements 14 bzw. damit bewegungsgekoppelter Belichtungselemente 10 parallel zu der Bauebene 11 und somit eine rechtwinklige, d. h. unter einem Belichtungswinkel von ca. 90° relativ zu der Bauebene 11 erfolgende, Belichtung der Bauebene 11.

Anhand von Fig. 2 sind weiterhin in strichlierter Darstellung ausgehend von einer beispielhaften Ausgangsposition einige beispielhafte Bewegungspositionen des magnetischen Läuferelements 14 innerhalb der durch die Abmessungen des flächigen Statorelementabschnitts 17 definierten Bewegungsebene angedeutet. Wie erwähnt, ist das magnetische Läuferelement 14 in beliebigen translatorischen und/oder rotatorischen Bewegungsfreiheitsgraden bewegbar.

Anhand von Fig. 2 ist ferner eine denkbare Anordnungsmöglichkeit einer zur elektrischen Versorgung der statorelementseitigen bzw. läuferelementseitigen elektromagnetischen Bestandteile vorgesehene elektrische Energieversorgung 15 zu erkennen. Die elektrische Energieversorgung 15, bei welcher es sich um eine übliche elektrische Energiequelle, d. h. z. B. einen Netzanschluss mit zugehöriger Steuerungselektronik handeln kann, ist hier statorelementseitig angeordnet. Die elektrische Versorgung des magnetischen Läuferelements 14 erfolgt vermittels eines z. B. als elektrisches Verbindungskabel ausgebildeten elektrischen Verbindungselements 16 zwischen der elektrischen Energieversorgung 15 und dem magnetischen Läuferelement 14. Das elektrische Verbindungselement 16 ist strukturell so ausgebildet, dass es eine größtmögliche Bewegungsfreiheit des magnetischen Läuferelements 14 ermöglicht; das elektrische Verbindungselement 16 weist sonach z. B. eine entsprechend ausreichende Flexibilität und Länge auf.

Fig. 3 zeigt eine Prinzipdarstellung einer Vorrichtung 1 gemäß einem weiteren Ausführungsbeispiel in einer zu Fig. 2 analogen Ansicht.

Anhand von Fig. 3 ist ersichtlich, dass die magnetische Lagerungseinrichtung 12 mehrere abhängig oder unabhängig voneinander bewegbare magnetische Läuferelemente 14 umfassen kann. Dies ist insbesondere für den Fall, in dem die Belichtungseinrichtung 9 eine Vielzahl an Belichtungselementen 10 umfasst, wobei eine bestimmte Anzahl an in einer bestimmten Ausrichtung relativ zueinander, z. B. reihen- und/oder spaltenartig, angeordneten Belichtungselementen 10 baulich zu einer (ersten) Belichtungselementgruppe 18 und eine bestimmte Anzahl an in einer bestimmten Ausrichtung relativ zueinander, z. B. reihen- und/oder spaltenartig, angeordneten Belichtungselementen 10 baulich zu einer weiteren Belichtungselementgruppe 19 zusammengefasst sind. Wie erwähnt, können jeweilige magnetische Läuferelemente 14 abhängig oder unabhängig voneinander bewegt werden; mithin können auch jeweilige Belichtungselementgruppen 18, 10 abhängig oder unabhängig voneinander bewegt werden.

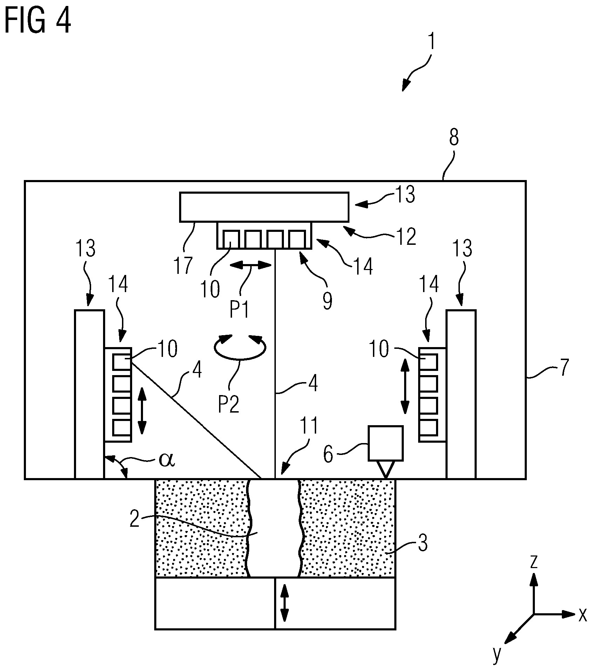

Fig. 4 zeigt eine Prinzipdarstellung einer Vorrichtung 1 gemäß einem weiteren Ausführungsbeispiel.

Als allgemeiner Unterschied zu den in den vorherigen Fig. gezeigten Ausführungsbeispielen umfasst die magnetische Lagerungseinrichtung 12 hier mehrere magnetische Statorelemente 13 mit diesen jeweils zugeordneten magnetischen Läuferelementen 14. Als besonderer Unterschied zu den in den vorherigen Fig. gezeigten Ausführungsbeispielen sind winklig, d. h. lotrecht, relativ zu der Bauebene 11 ausgerichtete magnetische Statorelemente 13 bzw. flächige Statorelementabschnitte 17 vorhanden. Selbstverständlich ist es möglich, nur ein winklig relativ zu der Bauebene 11 ausgerichtetes magnetisches Statorelement 13 vorzusehen. Entsprechend winklig relativ zu der Bauebene 11 ausgerichtete flächige Statorelementabschnitte 17 können sich gegebenenfalls vollständig entlang der Außenabmessungen der Bauebene 11 erstrecken und die Bauebene 11 sonach gegebenenfalls vollständig umgeben. Selbstverständlich können hierfür mehrere winklig relativ zu der Bauebene 11 ausgerichtete flächige Statorelementabschnitte 17 vorhanden sein.

Die winklige Anordnung jeweiliger flächiger Statorelementabschnitte 17 relativ zu der Bauebene 11 ermöglicht eine (simultane) Bewegung jeweiliger magnetischer Läuferelemente 14 bzw. damit bewegungsgekoppelter Belichtungselemente 10 in unterschiedlichen Winkeln α (deutlich) unterhalb 90° relativ zu der Bauebene 11 und somit eine (simultane) winklige, d. h. unter einem Belichtungswinkel α < 90°, insbesondere zwischen 1 und 89°, bevorzugt zwischen 10 und 80°, relativ zu der Bauebene 11 erfolgende, Belichtung der Bauebene 11. Beispielhafte Bewegungen der magnetischen Läuferelemente 14 sind durch (horizontale und vertikale) Doppelpfeile angedeutet.

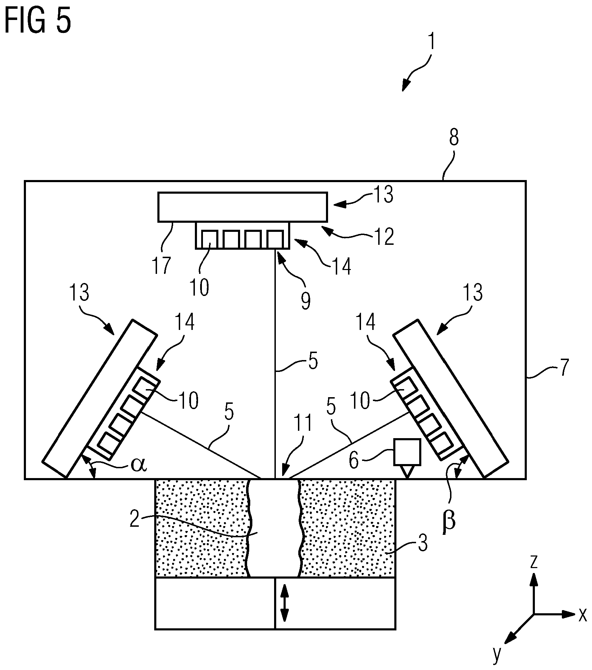

Fig. 5 zeigt eine Prinzipdarstellung einer Vorrichtung 1 gemäß einem weiteren Ausführungsbeispiel.

Im Unterschied zu dem in Fig. 4 gezeigten Ausführungsbeispiel sind winklig geneigt relativ zu der Bauebene 11 ausgerichtete magnetische Statorelemente 13 bzw. flächige Statorelementabschnitte 17 vorhanden. Selbstverständlich ist es möglich, nur ein winklig geneigt relativ zu der Bauebene 11 ausgerichtetes magnetisches Statorelement 13 vorzusehen. Auch die winklig geneigte Anordnung jeweiliger flächiger Statorelementabschnitte 17 relativ zu der Bauebene 11 ermöglicht eine Bewegung jeweiliger magnetischer Läuferelemente 14 bzw. damit bewegungsgekoppelter Belichtungselemente 10 in unterschiedlichen Winkeln α, β (deutlich) unterhalb 90° relativ zu der Bauebene 11 und somit eine winklige, d. h. unter einem Belichtungswinkel < 90°, insbesondere zwischen 10 und 80°, relativ zu der Bauebene 11 erfolgende, Belichtung der Bauebene 11. Beispielhafte Bewegungen der magnetischen Läuferelemente 14 sind wiederum durch Doppelpfeile angedeutet.

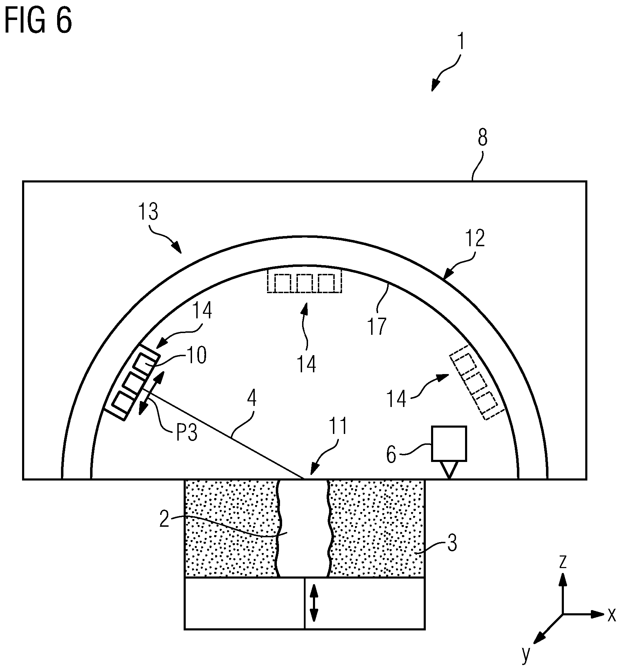

Fig. 6 zeigt eine Prinzipdarstellung einer Vorrichtung 1 gemäß einem weiteren Ausführungsbeispiel.

Im Unterschied zu dem in den vorherigen Fig. gezeigten Ausführungsbeispielen ist der flächige Statorelementabschnitt 17 hier nicht planeben (flach), sondern gebogen bzw. gewölbt, mithin kuppelartig ausgebildet. Mögliche Bewegungen eines magnetischen Läuferelements 14 verlaufen hier-wie durch den Doppelpfeil P3 angedeutet - insbesondere entlang einer durch die Biegung bzw. Wölbung des flächigen Statorelementabschnitts 17 definierten bogenartigen bzw. -förmigen Bewegungsbahn bzw. -ebene. Beispielhafte Positionen des magnetischen Läuferelements 14 sind strichliert dargestellt.

Für alle Ausführungsbeispiel gilt, dass zwischen einem jeweiligen flächigen Statorelementabschnitt 17 und der Bauebene 11 ein hinreichend großer Abstand vorhanden ist, sodass die magnetische Wechselwirkung zwischen einem magnetischen Statorelement 13 und einem magnetischen Läuferelement 14 keinen (magnetischen) Einfluss auf die Güte einer in der Bauebene 11 ausgebildeten (magnetischen bzw. magnetisierbaren) Baumaterialschicht hat. Gegebenenfalls können gesonderte magnetische Abschirmungselemente (nicht gezeigt), z. B. aus einer geeigneten Abschirmungsstruktur bzw. einem geeigneten Abschirmungsmaterial, z. B. einem Abschirmungsblech, zur magnetischen Abschirmung der Bauebene 11 von der magnetischen Lagerungseinrichtung 12 vorgesehen sein.

Für alle Ausführungsbeispiele gilt weiterhin, dass auch flächige Statorelementabschnitte 17 in wenigstens einem Bewegungsfreiheitsgrad relativ zu der Bauebene 11 bewegbar gelagert sein können. Hierfür sind die flächigen Statorelementabschnitte 17 an einer in wenigstens einem Bewegungsfreiheitsgrad relativ zu der Bauebene 11 bewegbar gelagerten Halteeinrichtung (nicht gezeigt) gehaltert. Bewegungen einer entsprechenden Halteeinrichtung können translatorische Bewegungsfreiheitsgrade entlang wenigstens einer Translationsachse und/oder rotatorische Bewegungsfreiheitsgrade um wenigstens eine Rotationsachse beinhalten.

Schließlich gilt für alle Ausführungsbeispiele, dass einzelne, mehrere oder sämtliche flächigen Statorelementabschnitte 17 modulartig ausgebildet sein können, wobei die modulartig ausgebildeten flächigen Statorelementabschnitte 17 in wenigstens einer vorbestimmten Anordnungsposition relativ zu der Bauebene 11 lösbar an der Gehäusestruktur 7 befestigbar oder befestigt sind. Die Gehäusestruktur 7 kann hierfür beispielsweise mit unterschiedlich ausgerichteten, z. B. im Hinblick auf die geometrische Gestaltung, d. h. insbesondere Abmessungen und Form, der einschubartig ausgestalteten, Aufnahmeeinrichtungen (nicht gezeigt) zur jeweiligen Aufnahme wenigstens eines flächigen Statorelementabschnitts 17 ausgestattet sein. Derart ist es möglich, die Vorrichtung 1 im Hinblick auf bestimmte "Baujobs", d. h. die additive Herstellung bestimmter Objekte 2, individuell zu konfigurieren, um eine möglichst hohe Bauteilqualität und/oder Baurate zu erhalten.

Über die in den Fig. gezeigten Vorrichtungen 1 lässt sich jeweils ein Verfahren zur additiven Herstellung eines dreidimensionalen Objekts 2 durch sukzessive schichtweise selektive Verfestigung einzelner Baumaterialschichten aus verfestigbarem Baumaterial 3 vermittels wenigstens eines Energiestrahls 4 realisieren. Bei dem Verfahren kann es sich um ein selektives Laserschmelzverfahren (SLM-Verfahren) oder um ein selektives Lasersinterverfahren (SLS-Verfahren) handeln.

Einzelne, mehrere oder sämtliche der mit Bezug auf ein bestimmtes Ausführungsbeispiel gezeigten Merkmale lassen sich auf wenigstens ein anderes Ausführungsbeispiel übertragen.

### BEZUGSZEICHENLISTE

- 1: Vorrichtung
- 2: Objekt
- 3: Baumaterial
- 4: Energiestrahl
- 5: Doppelpfeil
- 6: Beschichtereinrichtung
- 7: Gehäusestruktur
- 8: Prozesskammer
- 9: Belichtungseinrichtung
- 10: Belichtungselement
- 11: Bauebene
- 12: magnetische Lagerungseinrichtung
- 13: magnetisches Statorelement
- 14: magnetisches Läuferelement
- 15: elektrische Energieversorgung
- 16: elektrisches Verbindungselement
- 17: flächiger Statorelementabschnitt
- 18: Belichtungselementgruppe
- 19: Belichtungselementgruppe

- P1: Doppelpfeil
- P2: Doppelpfeil

## Patentansprüche

1. Vorrichtung (1) zur additiven Herstellung eines dreidimensionalen Objekts (2) durch sukzessive schichtweise selektive Belichtung und damit einhergehende Verfestigung von in einer Bauebene (11) ausgebildeten Baumaterialschichten aus verfestigbarem Baumaterial (3) vermittels wenigstens eines Energiestrahls (4), umfassend eine Belichtungseinrichtung (9), welche wenigstens ein Belichtungselement (10) zur Erzeugung eines auf die Bauebene (11) gerichteten Energiestrahls (4) zur selektiven Belichtung einer selektiv zu verfestigenden Baumaterialschicht, umfasst, **dadurch gekennzeichnet, dass** das wenigstens eine Belichtungselement (10) vermittels einer magnetischen Bewegungs- und Lagerungseinrichtung (12) in wenigstens einem Bewegungsfreiheitsgrad relativ zu der Bauebene (11) bewegbar gelagert ist, wobei die magnetische Bewegungs- und Lagerungseinrichtung (12) wenigstens ein an einer vorrichtungsseitigen Gehäusestruktur (7) angeordnetes oder ausgebildetes magnetisches Statorelement (13) und wenigstens ein an einem Belichtungselement (10) angeordnetes oder ausgebildetes magnetisches Läuferelement (14) umfasst, wobei die magnetische Bewegungs- und Lagerungseinrichtung (12) als ein Planarantrieb ausgebildet ist oder einen solchen umfasst.

2. Vorrichtung nach Anspruch 1, **dadurch gekennzeichnet, dass** das wenigstens eine magnetische Statorelement (13) wenigstens einen eine Bewegungsbahn oder -ebene definierenden flächigen Statorelementabschnitt (17) umfasst, welcher parallel und/oder winklig relativ zu der Bauebene (11) ausgerichtet ist.

3. Vorrichtung nach Anspruch 2, **dadurch gekennzeichnet, dass** der flächige Statorelementabschnitt (17) zumindest abschnittsweise, insbesondere vollständig, eben oder zumindest abschnittsweise, insbesondere vollständig, gebogen oder gewölbt ausgebildet ist.

4. Vorrichtung nach Anspruch 2 oder 3, **dadurch gekennzeichnet, dass** wenigstens ein flächiger Statorelementabschnitt (17) winklig relativ zu der Bauebene (11) ausgerichtet ist, wobei der flächige Statorelementabschnitt (17) die Außenabmessungen der Bauebene (11) zumindest abschnittsweise umgibt.

5. Vorrichtung nach Anspruch 4, **gekennzeichnet durch** mehrere winklig relativ zu der Bauebene (11) ausgerichtete flächige Statorelementabschnitte (17), welche die Außenabmessungen der Bauebene (11) gemeinsam zumindest abschnittsweise, insbesondere vollständig, umgeben.

6. Vorrichtung nach einem der Ansprüche 2 bis 5, **dadurch gekennzeichnet, dass** der wenigstens eine flächige Statorelementabschnitt (17) an einer Halteeinrichtung gehaltert ist, wobei die Halteeinrichtung in wenigstens einem Bewegungsfreiheitsgrad relativ zu der Bauebene (11) bewegbar gelagert ist.

7. Vorrichtung nach einem der Ansprüche 2 bis 6, **dadurch gekennzeichnet, dass** die flächigen Statorelementabschnitte (17) modulartig ausgebildet sind, wobei die modulartig ausgebildeten Statorelementabschnitte (17) in wenigstens einer vorbestimmten Anordnungsposition relativ zu der Bauebene (11) lösbar an einer vorrichtungsseitigen Gehäusestruktur (7) befestigbar oder befestigt sind.

8. Vorrichtung nach einem der Ansprüche 2 bis 7, **dadurch gekennzeichnet, dass** die Belichtungseinrichtung (9) eine Vielzahl an Belichtungselementen (10) umfasst, wobei eine bestimmte Anzahl an, insbesondere spalten- oder reihenartig angeordneten, Belichtungselementen (10) baulich zu wenigstens einer Belichtungselementgruppe (18, 19) zusammengefasst sind.

9. Vorrichtung nach einem der vorhergehenden Ansprüche, **dadurch gekennzeichnet, dass** ein Belichtungselement (10) als ein Laserdiodenelement oder als ein mit einem Laserdiodenelement koppelbares oder gekoppeltes, insbesondere linsenförmiges, optisches Element oder als ein Scannerelement als Teil einer optischen Scannereinrichtung ausgebildet ist oder wenigstens eines der genannten Elemente umfasst.

10. Vorrichtung nach einem der vorhergehenden Ansprüche, **gekennzeichnet durch** wenigstens ein zwischen die Bauebene (11) und die magnetische Bewegungs- und Lagerungseinrichtung (12) angeordnetes Abschirmungselement zur magnetischen Abschirmung der Bauebene (11) von der magnetischen Bewegungs- und Lagerungseinrichtung (12).

11. Verfahren zur additiven Herstellung wenigstens eines dreidimensionalen Objekts (2) durch sukzessive schichtweise selektive Belichtung und damit einhergehende Verfestigung einzelner Baumaterialschichten aus verfestigbarem Baumaterial (3) vermittels wenigstens eines Energiestahls (4) in einer Bauebene (11), **dadurch gekennzeichnet, dass** zur additiven Herstellung des wenigstens einen dreidimensionalen Objekts (2) eine Vorrichtung (1) zur additiven Herstellung wenigstens eines dreidimensionalen Objekts (2) nach einem der vorhergehenden Ansprüche verwendet wird.

## Claims

1. A device (1) for the additive manufacture of a three-dimensional object (2) by successive, selective layered irradiation and associated solidification of built material layers formed in a construction plane (11) of a built material (3) that can be solidified by means of at least one energy beam (4), comprising an irradiation device (9) which comprises at least one irradiation element (10) to generate an energy beam (4) directed to the construction plane (11) for the selective irradiation of a built material layer that is to be solidified, **characterized in that** at least one irradiation element (10) is displaceably supported by means of a magnetic displacement and mounting device (12) in at least one degree of freedom relative to the construction plane (11), wherein the magnetic moving and mounting device (12) comprises at least one magnetic stator element (13) arranged or formed on a housing structure (7) of the device, and at least one magnetic rotor element (14) arranged or formed on an irradiation element (10), wherein the magnetic moving and mounting device (12) is built as or comprises a planar drive.

2. A device according to claim 1, **characterized in that** the at least one magnetic stator element (13) comprises at least one planar stator element portion (17) defining a movement path or a movement plane, which is parallel and/or angular relative to the construction plane (11).

3. A device according to claim 2, **characterized in that** the planar stator element portion (17) is formed such that it is even-at least partially but especially completely-or such that it is arcuate or curved, at least partially but especially completely.

4. A device according to claim 2 or 3, **characterized in that** at least one planar stator element portion (17) is aligned such that it is angled relative to the construction plane (11), with the planar stator element portion (17) at least partially encompassing the outside dimensions of the construction plane (11).

5. A device according to claim 4, **characterized by** several planar stator element portions (17) that are aligned such that they are angled relative to the construction plane (11), which together at least partially, especially completely, encompass the outside dimensions of the construction plane (11).

6. A device according to any one of claims 2-5, **characterized in that** the at least one planar stator element portion (17) is held on a holding device, with the holding device being displaceably supported in at least one degree of freedom relative to the construction plane (11).

7. A device according to any one of claims 2-6, **characterized in that** the planar stator element portions (17) are formed in a modular manner, where the stator element portions (17) formed in a modular manner can be removably attached or are removably attached to a housing structure (7) of the device in at least one predetermined arrangement position relative to the construction plane (11).

8. A device according to any one of claims 2-7, **characterized in that** the irradiation device (9) comprises a plurality of irradiation elements (10), wherein a certain number of irradiation elements (10), especially arranged in columns or lines, are structurally combined into at least one irradiation element group (18, 19).

9. A device according to any one of the preceding claims, **characterized in that** an irradiation element (10) is formed as a laser diode element or a, especially lens-shaped, optical element that can be coupled with or is coupled with a laser diode element, or as a scanner element as part of an optical scanner device, or comprises at least one of the elements mentioned.

10. A device according to any one of the preceding claims, **characterized by** at least one shielding element arranged between the construction plane (11) and the magnetic moving and mounting device (12) to magnetically shield the construction plane (11) from the magnetic moving and mounting device (12).

11. A method for the additive manufacture of at least one three-dimensional object (2) by successive, selective layered irradiation and thus solidification of individual built material layers of a built material (3) that can be solidified by means of an energy beam (4) in a construction plane (11), **characterized in that** for the additive manufacture of at least one three-dimensional object (2) a device (1) for the additive manufacture of at least one three-dimensional object (2) according to any one of the preceding claims is used.

## Revendications

1. Dispositif (1) pour la fabrication additive d'un objet tridimensionnel (2) par exposition sélective successive couche par couche à un rayonnement accompagnée d'une solidification de couches de matériau de construction composées d'un matériau de construction (3) pouvant être solidifié, réalisées dans un plan de construction (11) au moyen d'au moins un faisceau d'énergie (4), comprenant
un système d'exposition à un rayonnement (9), lequel comprend au moins un élément d'exposition à un rayonnement (10) pour produire un faisceau d'énergie (4) dirigé sur le plan de construction (11) pour l'exposition sélective à un rayonnement d'une couche de matériau de construction à solidifier de manière sélective, **caractérisé en ce que** l'au moins un élément d'exposition à un rayonnement (10) est monté de manière à pouvoir être déplacé par rapport au plan de construction (11) selon au moins un degré de liberté de mouvement au moyen d'un système de déplacement et de montage magnétique (12), dans lequel
le système de déplacement et de montage magnétique (12) comprend au moins un élément statorique magnétique (13) disposé ou réalisé sur une structure de boîtier (7) du côté du dispositif et au moins un élément d'induit magnétique (14) disposé ou réalisé sur un élément d'exposition à un rayonnement (10), dans lequel le système de déplacement et de montage magnétique (12) est réalisé en tant qu'un entraînement planaire ou comprend un entraînement de ce type.

2. Dispositif selon la revendication 1, **caractérisé en ce que** l'au moins un élément statorique magnétique (13) comprend au moins un segment d'élément statorique (17) plat définissant une trajectoire ou un plan de déplacement lequel est orienté de manière parallèle et/ou de manière angulaire par rapport au plan de construction (11).

3. Dispositif selon la revendication 2, **caractérisé en ce que** le segment d'élément statorique (17) plat est réalisé au moins par endroits, en particulier en totalité, de manière plane ou au moins par endroits, en particulier en totalité, de manière arquée ou bombée.

4. Dispositif selon la revendication 2 ou 3, **caractérisé en ce qu'**au moins un segment d'élément statorique (17) plat est orienté de manière angulaire par rapport au plan de construction (11), dans lequel le segment d'élément statorique (17) plat entoure au moins par endroits les dimensions extérieures du plan de construction (11).

5. Dispositif selon la revendication 4, **caractérisé par** plusieurs segments d'élément statorique (17) plats orientés de manière angulaire par rapport au plan de construction (11), lesquels entourent ensemble au moins par endroits, en particulier en totalité, les dimensions extérieures du plan de construction (11).

6. Dispositif selon l'une quelconque des revendications 2 à 5, **caractérisé en ce que** l'au moins un segment d'élément statorique (17) plat est maintenu sur un système de maintien, dans lequel le système de maintien est monté de manière à pouvoir être déplacé par rapport au plan de construction (11) selon au moins un degré de liberté de mouvement.

7. Dispositif selon l'une quelconque des revendications 2 à 6, **caractérisé en ce que** les segments d'élément statorique (17) plats sont réalisés de manière modulaire, dans lequel les segments d'élément statorique (17) réalisés de manière modulaire peuvent être fixés ou sont fixés de manière amovible sur une structure de boîtier (7) du côté du dispositif par rapport au plan de construction (11) dans au moins une position d'agencement prédéfinie.

8. Dispositif selon l'une quelconque des revendications 2 à 7, **caractérisé en ce que** le système d'exposition à un rayonnement (9) comprend une pluralité d'éléments d'exposition à un rayonnement (10), dans lequel un nombre défini d'éléments d'exposition à un rayonnement (10) disposés en particulier à la manière de colonnes ou de rangées sont assemblés de manière structurelle en au moins un groupe d'éléments d'exposition à un rayonnement (18, 19).

9. Dispositif selon l'une quelconque des revendications précédentes, **caractérisé en ce qu'**un élément d'exposition à un rayonnement (10) est réalisé en tant qu'un élément à diode laser ou en tant qu'un élément optique, en particulier en forme de lentille, pouvant être couplé ou couplé à un élément à diode laser ou en tant qu'un élément de scanner en tant que partie d'un système de scanner optique ou comprend au moins un desdits éléments.

10. Dispositif selon l'une quelconque des revendications précédentes, **caractérisé par** au moins un élément de protection disposé entre le plan de construction (11) et le système de déplacement et de montage magnétique (12) pour la protection magnétique du plan de construction (11) vis-à-vis du dispositif de déplacement et de montage magnétique (12).

11. Procédé pour la fabrication additive d'au moins un objet tridimensionnel (2) par exposition sélective successive couche par couche à un rayonnement accompagnée d'une solidification de diverses couches de matériau de construction composées d'un matériau de construction (3) pouvant être solidifié au moyen d'au moins un faisceau d'énergie (4) dans un plan de construction (11), **caractérisé en ce qu'**un dispositif (1) pour la fabrication additive d'au moins un objet tridimensionnel (2) selon l'une quelconque des revendications précédentes est utilisé pour la fabrication additive de l'au moins un objet tridimensionnel (2).
